# EUROPEAN PATENT APPLICATION

(11) **EP 2 590 104 A1**
(43) Date of publication of application: **08.05.2013**
(21) Application number: 12191326.3
(22) Date of filing: 05.11.2012
(51) Int. Cl.: G06F 21/31

(54) **Method for verifying a password**

(30) Priority: 03.11.2011 GB 201119018
(71) Applicant: Proxama Limited, Norwich, Norfolk NR3 1TN (GB)
(72) Inventor: Harbige, David, Norwich, Norfolk NR3 1TN (GB); Garner, Neil, Norwich, Norfolk NR3 1TN (GB); Taylor, James, Norwich, Norfolk NR3 1TN (GB)
(74) Representative: Thompson, Andrew John

(57) **Abstract**

A method for verifying a password in a computing device, wherein the computing device comprises: a user input interface; a trusted hardware module having a trusted application stored therein, the trusted hardware module arranged to provide the trusted application with access to at least said user input interface; and a secure verification application for verifying the password; the method comprising: the trusted application receiving a request to obtain a user password; the trusted hardware module providing the trusted application with access to the user input interface; the user entering a password using the user input interface; the trusted application encoding the entered password; passing the encoded password to the secure transaction application; and decoding the password.

## Description

### Field of the Invention

The present invention relates to a method for verifying a password.

### Background to the Invention

Contactless payment cards, including those based on EMV (Europay, MasterCard and VISA) technology and those based on older magnetic stripe technology, have existed as physical plastic cards for several years now. More recently, the same secure applications that enable transactions on plastic cards have been installed into mobile phone devices, either using a secure element embedded into the mobile phone's hardware, a secure element embedded into a SIM card, or using an "external" device such as a microSD card. Currently, the intention of these payment applications has been to allow the mobile phone to act as a carrier for the payment application, allowing payments to be made in the physical world analogous to transactions using contactless payment cards. The mobile phone in these cases acts as an additional user interface for the cardholder, providing feedback on transaction attempts and potentially the ability to select from a variety of payment applications present on the secure element the one with which the user wishes to pay.

A further recent innovation in this area has been the modification of the underlying payment applications to support Cardholder Verification using the mobile phone handset. In this scenario, the cardholder can either choose or be prompted to enter their PIN number into their handset. This PIN is then validated locally by the embedded payment application. The payment application will confirm that the PIN has been entered by the cardholder in all subsequent communications regarding a transaction. The results of this Cardholder Verification process are cryptographically represented in the transaction information subsequently presented to the card's issuer, thus allowing the issuer to have a high level on confidence that the transaction was intended by the cardholder. This mechanism provides both a high level of transaction security and a high level of customer convenience: two factors which are usually, to some extent, mutually exclusive. However, this mechanism is still only suitable for physical transactions where the phone, and therefore the embedded card, are actively presented to a physical card reader in close proximity. Where a mobile phone handset having a mobile wallet is used to make an online transaction, the problem of ensuring that the cardholder is the one making a transaction is more severe.

The cryptographic processes embedded into the EMV technology at the core of all mobile-based payment applications (even those which utilise the "magstripe" authorisation processes) already gives a card issuer sufficient means to ensure that a transaction has been initiated using a valid instance of a payment application. The problem arises when proving that the transaction was actually authorised by the cardholder. Even PIN validation does not give this. The Cardholder Verification information received by the issuer only proves that at the time the transaction information was presented to the card, the card was in a "PIN-verified" state. It does not guarantee that the PIN presented to the card was entered by the cardholder in order to particularly authorise the current transaction.

Mobile phones are intelligent devices with large amounts of memory, processing power and long term storage. Their operating systems are generally written with a view to usability rather than security. They are therefore ideal devices to be targeted by Malware: software specifically written to perform operations other than what the user of the phone would generally wish. Such Malware could, potentially, "sniff" for user input when the PIN was being entered and store it for subsequent malicious use, or even present the user with a fake user interface and obtain the PIN in that way.

In the "physical" world this does not present a major problem: the PIN is only useful in conjunction with the payment application and the payment application can only be used to authorise transactions at a physical point of sale. However, if this technology were to be used to authorise transactions via the Internet, Malware resident in the mobile phone would potentially have access to the payment application, the user's PIN and a communications channel over which authorisations could be made. This would obviously present an extremely inviting target for malicious code writers.

It is an object of the present invention to provide a mechanism for secure PIN entry.

### Summary of the Invention

In a first aspect, the present invention provides a method for verifying a password in a computing device, wherein the computing device comprises: a user input interface; a trusted hardware module having a trusted application stored therein, the trusted hardware module arranged to provide the trusted application with access to at least said user input interface; and a secure verification application for verifying the password; the method comprising: the trusted application receiving a request to obtain a user password; the trusted hardware module providing the trusted application with access to the user input interface; the user entering a password using the user input interface; the trusted application encoding the entered password; passing the encoded password to the secure transaction application; and decoding the password.

In a second aspect, the present invention provides a computing device for verifying passwords, the device comprising: a user input interface; a trusted hardware module having a trusted application stored therein, the trusted hardware module arranged to provide the trusted application with access to at least said user input interface; and a secure verification application for verifying passwords; wherein the trusted application is arranged to encode a password entered by a user; and the trusted application is further arranged to pass the encoded password to the secure verification application, in order to verify the password.

In a third aspect, the present invention provides a trusted hardware module, for secure password entry, the module comprising: an interface with a user input interface; a trusted application; wherein the trusted hardware module is arranged to provide the trusted application with access to at least said user input interface; the trusted application is arranged to encode a password entered by a user; and the trusted application is further arranged to pass the encoded password to a secure verification application, for verifying passwords, in order to verify the entered password.

Further features of the present invention are provided in the appended claims.

### Brief Description of the Drawings

The present invention will now be described, by way of example only, and with reference to the accompanying drawings, in which:
Figure 1 shows a mobile computing device in accordance with an embodiment of the present invention;
Figure 2 shows a method of operation of the device shown in Figure 1, in accordance with an embodiment of the invention; and
Figure 3 shows a further method of operation of the device shown in Figure 1, in accordance with an embodiment of the invention.

### Detailed Description of the Embodiments of the Invention

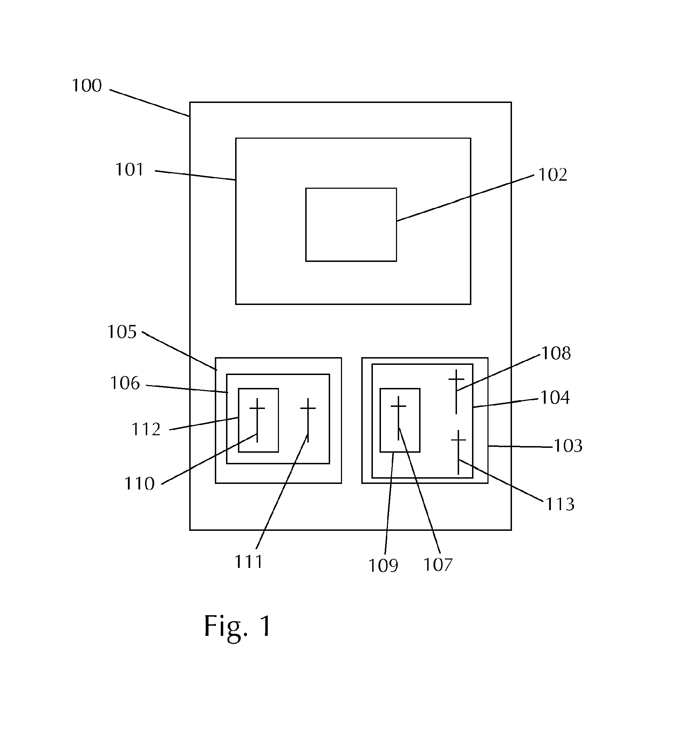

Figure 1 shows a representation of a mobile computing device 100 (such as a mobile phone). This representation shows the different hardware and software elements contained within the device 100, as well as the exchange of information between those components. The device 100 includes a user application space 101 (user mode) in which a wallet application 102 is stored and run. This application provides the user interface for the user of the device 100. The device 100 also includes a secure space 103 (secure mode) which may not be accessed by the user or any untrusted software. A payment applet 104 is stored and run in this space. The payment applet is for storing keys for encrypting and decrypting PIN information entered by a user. In this example of the invention, the payment applet 104 is an EMV-based payment application. The wallet application 102 manages user interaction with the payment applet 104.

The device 100 also includes trusted hardware module 105. The trusted hardware module 105 is only able to run pre-authorised code that has been appropriately signed. The trusted hardware module 105 is designed to give pre-authorised code exclusive access to certain pre-designated hardware modules. In this case, the trusted hardware module 105 is arranged to give exclusive access to the device keypad. While code is running on the trusted hardware module, no code running outside that module can access the pre-designated hardware modules. Furthermore, no code running outside the trusted hardware module 105 can access memory, events or user interaction being managed by the code running inside the trusted hardware module. In the present case, the pre-authorised code includes a PIN entry application 106. The trusted hardware module 105 and the PIN entry application 106 ensure the PIN entered by the user is not obtainable in a useable form by any rouge processes. The trusted hardware module 105 is within the phone core architecture and supports sandboxed processing.

The mechanism for ensuring secure transactions may take place utilises three sets of keys. Each set includes a public/private key pair, some of which are stored in the device 100. The payment applet 104 includes a payment application public key 107 and a payment application private key 108. The payment application public key is stored in a payment application public key certificate 109. The payment application public key 107 will be used by the PIN entry application 106 to encrypt the PIN entered by a user. The payment application private key 108 will be used to decrypt the encrypted PIN. The payment application public key 107 is signed with an issuer private key and stored in the payment application public key certificate 109.

The trusted hardware module 105 includes a trusted hardware module public key 110 and a trusted hardware module private key 111. The trusted hardware module public key 110 is also signed with the issuer private key and stored in a trusted hardware module public key certificate 112. The trusted hardware module private key 111 is used to further encrypt PIN information entered by a user. The trusted hardware module public key certificate 112 is sent back to the payment applet 104 in order for the payment applet to access the trusted hardware module public key 110. The payment applet 104 also includes issuer public key 113. This enables the payment applet 104 to access the trusted hardware module public key 110.

The method of operation of the device 100 will now be described.

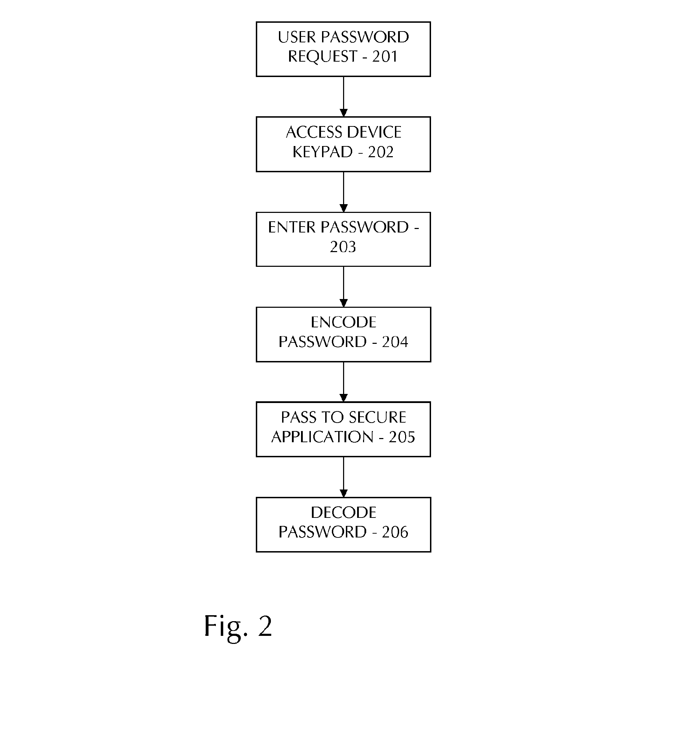

Figure 2 shows a method of operation in accordance with a first embodiment of the invention. Firstly, PIN entry application 106 (the trusted application) receives a request to obtain a user PIN (password) (step 201). The trusted hardware module 105 provides the trusted application with access to the device keypad (the user input interface) (step 202). The user then enters a password using the user input interface (step 203). The trusted application then encodes the entered password (step 204). The encoded password is then passed to the secure transaction application (step 205). The password is then decoded (step 206).

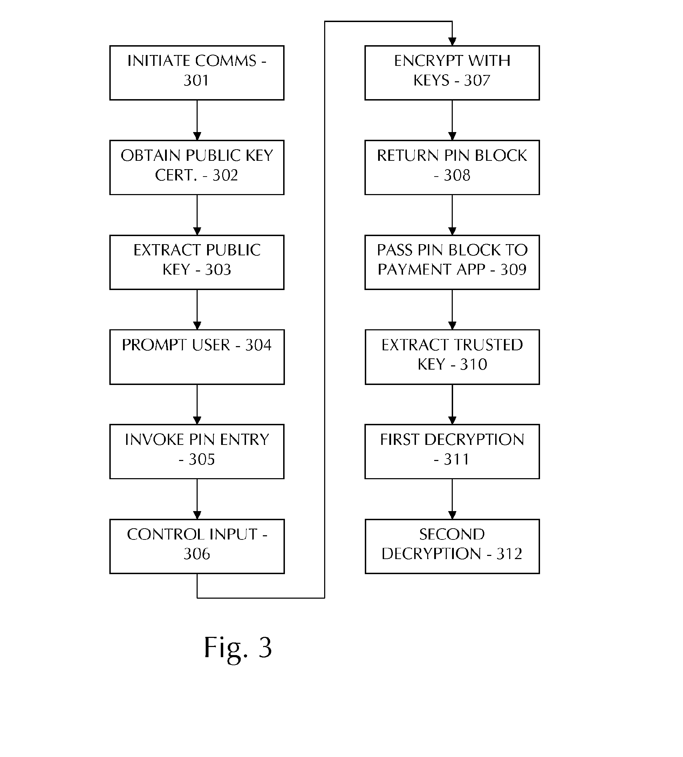

Figure 3 shows a method of operation in accordance with a further embodiment of the present invention. When a payment request is received from a compatible webpage, the wallet 102 initiates communication with the payment applet 104 (step 301) to obtain the payment application public key certificate 109 and a cryptographic challenge (step 302). The wallet 102 then extracts the payment applet's public key 107 from the certificate 109 using standard EMV-defined mechanisms (step 303). The wallet application 102 then presents a screen prompting the user to enter their PIN (step 304). The PIN entry application 106 is then invoked, and the payment application public key 107 is passed to it by the wallet application 102, along with the cryptographic challenge (step 305).

The PIN entry application 106 then takes control of the device's keypad and/or touchscreen interfaces such that no other application can gain access to the information being entered by the user (step 306). The PIN code entered by the user (and challenge supplied) are encrypted using the payment applet's public key 107 and using the trusted hardware module private key 111 (step 307). The trusted hardware module public key certificate 112 containing the public key 110 is returned to the wallet application 102 together with the twice-encrypted PIN block (step 308).

The twice-encrypted PIN block is then passed to the payment applet 104 together with the trusted hardware module public key certificate 112 (step 309). When the payment applet 104 receives the PIN verification request from the wallet application 102, it first attempts to extract the trusted hardware module public key 110 from the supplied public key certificate 112 using its own copy of the issuer public key 113 (step 310). If this is successful, the payment applet 104 can be sure that the verification request comes from a trusted source. The extracted public key 110 is then used to decrypt the supplied PIN block (311). If successful, the payment applet 104 knows that the PIN block received has come from the trusted source. The result of this decryption can then be further decrypted using the payment applet private key 108 (312).

This mechanism ensures that the PIN entered by the User cannot be obtained "in the clear" by any malicious process. Because the payment application public key 107 does not (and must not) have protected access within the payment applet 104, it may be targeted by malicious code writers. By including an extra pair of keys within the PIN entry application 106 within the trusted hardware module 107, access to PIN information is further restricted. This process makes it more difficult for malware to mimic any aspect of the system and obtain user PIN information.

The above-described mechanism ensures that verification of a user's PIN can only take place within a trusted environment. An issuer receiving an EMV-style authorisation request indicating that offline PIN verification has been successful can therefore be highly confident that the cardholder has provided their PIN for the sole purpose of authorising the transaction being processed.

Prior art payment applets may require modification in order allow a public key certificate to be passed to them along with an encrypted PIN block in the PIN verification command. Plaintext PIN validation could be disabled either by further modification of the payment applet or by use of a suitable personalisation profile for the payment applet.

In a further embodiment, the trusted hardware module 105 may provide the PIN entry application 106 with exclusive access to the mobile computing devices display. The PIN entry application can be programmed to display a particular image or message, familiar to the user, and which is guaranteed to come from the PIN entry application 106. For example, the device 100 may be programmed to display a "trusted prompt", such as a graphic or passphrase chosen by the user. This is displayed when the user is prompted to enter their PIN, giving the user further confidence that their PIN is being entered in a secure environment. The passphrase may be loaded into the trusted hardware module 105 in the same manner as the trusted hardware module public/private key pair.

An advantage of at least some of the above-described embodiments are that the device allows the same combination of convenience and security to be achieved in the mobile commerce environment: transactions that are initiated, completed and paid for using a mobile phone as the sole instrument of communication.

An advantage of at least some of the above-described embodiments is that the device ensures that a PIN entered at the request of a valid application cannot be intercepted in a useable form outside of that application. A further advantage is that it prevents a PIN obtained by other means being used to authorise transactions. These two mechanisms together effectively prevent unauthorised use of the payment application, and thus open the door to allowing EMV technology to be used to authorise mobile commerce transactions.

In the afore-mentioned embodiments, a mechanism of PIN verification has been described. It will be understood that the above-described mechanism may be used with passwords more generally. A password is intended to refer to any string of characters entered by a user into the device.

In the afore-mentioned embodiments, the mechanism by which a PIN is entered has not been described in detail. However, it will be appreciated by the skilled person that a PIN may be entered through any repeatable procedure, such as alphanumeric pad entry, swipe card, gesture based entry or biometric entry.

In the above-described embodiments, the user application is a payment application such as a mobile wallet. However, the PIN verification steps may take place through a bridging or router application, acting as an intermediately between the trusted hardware payment application.

In the above-mentioned embodiments, a mechanism which uses public/private key techniques has been described. The skilled person will appreciate that other techniques may be used. For example, pre-shared keys using either symmetric or asymmetric keys may be used. Furthermore, the keys may be passed from the secure application to the trusted hardware using standard PKI (public key infrastructure) certificate chains. Alternatively, the data may be signed rather then encrypted.

## Claims

1. A method for verifying a password in a computing device, wherein the computing device comprises:
a user input interface;
a trusted hardware module having a trusted application stored therein, the trusted hardware module arranged to provide the trusted application with access to at least said user input interface; and
a secure verification application for verifying the password;
the method comprising:
the trusted application receiving a request to obtain a user password;
the trusted hardware module providing the trusted application with access to the user input interface;
the user entering a password using the user input interface;
the trusted application encoding the entered password;
passing the encoded password to the secure transaction application; and
decoding the password.

2. A method according to claim 1, wherein said step of encoding is a step of encrypting and said step of decoding is a step of decrypting.

3. A method according to claim 2, wherein a first private key is used to encrypt the password, and a first public key is used to decrypt the password.

4. A method according to claims 2 or 3, wherein a second public key is used to encrypt the password, and a second private key is used to decrypt the password.

5. A method according to any preceding claim, wherein the trusted hardware module arranged to provide the trusted application with exclusive access to at least said user input interface, and the step of providing the trusted application with access to the user input interface is a step of providing exclusive access.

6. A method according to claim 3, wherein the first public key and first private key are stored in the trusted hardware module, the method further comprising:
passing the first public key to the secure verification application with the encrypted password.

7. A method according to claim 6, wherein said first public key is signed with a third private key and stored in a first public key certificate, and a third public key is stored with the secure verification application, the method further comprising:
using the third public key to extract the first public key from the first public key certificate.

8. A method according to claim 7, wherein the secure verification application includes said second public key and said second private key, the method further comprising:
passing the second public key to the trusted application with the request to the trusted application to obtain a user password;
the trusted application encrypting the entered password with the second public key prior to encrypting it with the first private key; and
after the secure verification application has decrypted the password using the first public key, further decrypting the password with the second private key.

9. A method according to claim 8, wherein said computing device further comprises a user application, and all data passed between the trusted hardware module and the secure verification application are passed through the user application.

10. A method according to claim 9, wherein said second public key is signed with the third private key and stored in a second public key certificate, and the step of passing the second public key to the trusted application includes passing the second public key certificate to the user application, the method further comprising:
the user application extracting the second public key using the third public key; and
the user application passing the second public key to the trusted application.

11. A method according to claim 10, wherein the computing device includes:
memory, arranged to store applications and a processor, arranged to run said applications, wherein said processor and memory are arranged to provide a user processing area and a secure processing area;
wherein said secure verification application is stored and run within said secure processing area; and said user application is stored and run within said user processing area.

12. A method according to claim 11, wherein said device further includes a display, the method further comprising: the user application prompting the user to enter their password by displaying a prompt on the display.

13. A method according to any preceding claim, wherein said method is for authorising a transaction, and said secure verification application is a secure transaction application for authorising transactions, the method further comprising:
receiving a transaction verification request, and the secure transaction application authorising the transaction if the password is verified.

14. A computing device for verifying passwords, the device comprising:
a user input interface;
a trusted hardware module having a trusted application stored therein, the trusted hardware module arranged to provide the trusted application with access to at least said user input interface; and
a secure verification application for verifying passwords;
wherein the trusted application is arranged to encode a password entered by a user; and
the trusted application is further arranged to pass the encoded password to the secure verification application, in order to verify the password.

15. A trusted hardware module, for secure password entry, the module comprising:
an interface with a user input interface;
a trusted application; wherein
the trusted hardware module is arranged to provide the trusted application with access to at least said user input interface;
the trusted application is arranged to encode a password entered by a user; and
the trusted application is further arranged to pass the encoded password to a secure verification application, for verifying passwords, in order to verify the entered password.
